Europäisches Patentamt

European Patent Office

Office européen des brevets

(19)

(11) **EP 0 823 047 B1**

(12) **EUROPÄISCHE PATENTSCHRIFT**

(45) Veröffentlichungstag und Bekanntmachung des Hinweises auf die Patenterteilung:
**26.03.2003 Patentblatt 2003/13**

(21) Anmeldenummer: **96907315.4**

(22) Anmeldetag: **20.04.1996**

(51) Int Cl.⁷: $G01N\ 3/52$, $G01N\ 3/48$, $G01N\ 3/40$

(86) Internationale Anmeldenummer:
**PCT/DE96/00563**

(87) Internationale Veröffentlichungsnummer:
**WO 96/034268 (31.10.1996 Gazette 1996/48)**

(54) **VERFAHREN ZUR HÄRTEPRÜFUNG UND VORRICHTUNG HIERZU**

PROCESS FOR TESTING HARDNESS AND DEVICE THEREFOR

PROCEDE ET APPAREIL POUR TESTER LA DURETE

(84) Benannte Vertragsstaaten:
**AT BE CH DE ES FR GB IT LI NL**

(30) Priorität: **26.04.1995 DE 19514848**

(43) Veröffentlichungstag der Anmeldung:
**11.02.1998 Patentblatt 1998/07**

(73) Patentinhaber: **KRAUTKRÄMER GmbH & Co.**
**D-50354 Hürth (DE)**

(72) Erfinder:
• **POLLOK, Heinz-Horst**
**D-50389 Wesseling (DE)**
• **WIESE, Andreas**
**D-53177 Bonn (DE)**

(74) Vertreter: **Bauer, Wulf, Dr.**
**Bayenthalgürtel 15**
**50968 Köln (Marienburg) (DE)**

(56) Entgegenhaltungen:
**DE-A- 2 452 880        DE-A- 4 030 472**
**US-A- 4 411 153**

## Beschreibung

Die Erfindung bezieht sich auf ein Verfahren zur Härteprüfung von Werkstücken, bei dem ein Prallkörper so auf das zu prüfende Werkstück bewegt wird, daß er (entlang eines Hinweges) auf dieses aufschlägt und (entlang eines Rückwegs) wieder von ihm zurückprallt, wobei auf dem Hinweg und auf dem Rückweg mittels einer berührungslos arbeitenden, elektromechanischen Einrichtung jeweils eine Bewegungsgröße des Prallkörpers erfaßt und aus dem Unterschied der Bewegungsgröße des Hinwegs und derjenigen des Rückwegs ein Maß für die Härte des Werkstücks erhalten wird und auf eine Vorrichtung zur Durchführung dieses Verfahrens.

Bei dem aus der DE 24 52 880 C2 bekannten Verfahren der eingangs genannten Art sowie der nach diesem Verfahren arbeitenden Vorrichtungen ist mit dem Prallkörper ein Permanentmagnet verbunden, der durch eine Induktionsspule bewegt wird, die mit einem rohrförmigen Gehäuse, innerhalb dessen der Prallkörper bewegbar ist, verbunden ist. Bei dem vorbekannten Verfahren werden die Bewegungsgrößen unmittelbar vor dem Aufprall und unmittelbar nach dem Rückprall erfaßt. In der Praxis muß man aber einen gewissen Abstand vom Prallzeitpunkt einhalten, eine Messung der Bewegungsgrößen unmittelbar im Prallzeitpunkt ist nicht durchführbar. Für die Auswertung ist es allerdings notwendig, auf den Prallzeitpunkt bzw. Prallort zu extrapolieren. Je näher die Messung am Prallort erfolgt, umso einfacher ist dies.

Je weiter entfernt aber die Bewegungsgrößen vom Prallort erfaßt werden, um so größer ist der Einfluß anderer Parameter, insbesondere der Schwerkraft. Es zeigt sich, daß bei dem vorbekannten Gerät der eingangs genannten Art der Abstand zwischen dem Prallort und dem Ort, an dem die Bewegungsgröße gemessen wird, bereits so erheblich ist, daß Schwerkrafteinflüsse eine nicht zu vernachlässigende Rolle spielen. Die auf dem Markt befindlichen Geräte der eingangs genannten Art sind mit Korrekturtabellen für ihre Orientierung ausgestattet. Diese Tabellen liegen entweder in gedruckter Form vor oder sie sind im Gerät abgespeichert und müssen bei der Auswertung gelesen oder angewählt werden. So spielt es insbesondere eine Rolle, ob der Prallkörper von unten, gegen den Schwerkrafteinfluß, auf das Werkstück hinbewegt wird und unter Schwerkrafteinfluß zurückfällt oder umgekehrt, ob die Schwerkraft den Prallkörper auf dem Hinweg beschleunigt und auf dem Rückweg abbremst, das Gerät also von oben auf ein zu prüfendes Werkstück aufgesetzt ist.

Die Korrekturverfahren nach dem Stand der Technik machen den Einsatz der vorbekannten Geräte umständlich, sie erschweren dem Benutzer die Anwendung. Weiterhin sind die Korrekturverfahren auch häufig ein Grund für fehlerhafte Messungen, weil die Korrekturen nicht ordnungsgemäß berücksichtigt werden, beispielsweise weil der tatsächliche Winkel zwischen dem Gerät und der Vertikalen falsch eingehalten wird.

Hier setzt nun die Erfindung ein. Sie hat es sich zur Aufgabe gemacht, das Verfahren der eingangs genannten Art und das nach diesem Verfahren arbeitende Härteprüfgerät so weiterzubilden, daß Schwerkrafteinflüsse bereits bei der Messung berücksichtigt werden und Korrekturtabellen auf diese Weise entbehrlich sind.

Gelöst wird diese Aufgabe ausgehend von dem Verfahren der eingangs genannten Art dadurch, daß die Bewegungsgröße mindestens an zwei unterschiedlichen Orten entlang eines Wegs, z. B. des Hinwegs erfaßt wird, das auf dem anderen Weg, z. B. Rückweg, die Bewegungsgröße kontinuierlich in Abhängig von der Zeit und für einen örtlichen Bereich, der auf jeden Fall die beiden genannten unterschiedlichen Orte des einen Wegs enthält, erfaßt wird, daß durch eine Rechenoperation die Werte für die Bewegungsgröße des anderen Wegs an den mindestens zwei Orten des einen Wegs aproximiert werden, und daß aus dem Vergleich der Bewegungsgrößen jeweils gleichen Orts ein Maß für die Härte des Werkstücks ermittelt wird.

Vorrichtungsmäßig wird diese Aufgabe durch Härteprüfgeräte nach den Patentansprüchen 7, 8 oder 9 gelöst.

Im Unterschied zum Verfahren und dem entsprechenden Gerät nach dem Stand der Technik zielt die Erfindung nicht darauf ab, die Bewegungsgrößen in möglichst unmittelbarer Nähe des Prallortes zu erfassen, weil sie die Bewegungsgrößen an mindestens zwei unterschiedlichen Orten erfaßt und über diese sowohl auf dem Hinweg als auch auf dem Rückweg den Einfluß der Schwerkraft berücksichtigen kann.

Bei dem erfindungsgemäßen Verfahren kann prinzipiell ein Härteprüfgerät, also eine Vorrichtung, verwendet werden, wie sie aus dem Stand der Technik bekannt ist. Dies ist besonders vorteilhaft, denn es werden für die Erfindung keine zusätzlichen Bauteile im Bereich der Mechanik des Härteprüfers benötigt, die Änderungen liegen im Bereich der Auswertelektronik. Verfahrensmäßig werden an zwei unterschiedlichen Orten auf einem Weg, z. B. dem Hinweg, die Bewegungsgrößen erfaßt, beispielsweise die Geschwindigkeit des Prallkörpers. Die Orte, an denen die Messung der Bewegungsgrößen erfolgt, müssen nicht konkret vorgegeben sein oder tatsächlich erfaßt werden, vielmehr genügt es, aus dem Zeitverlauf des Induktionssignals zwei oder mehrere Punkte auszuwählen.

Für den anderen Weg, z. B. den Rückweg, wird die Bewegungsgröße kontinuierlich als Funktion der Zeit und für einen örtlichen Bereich erfaßt, der auf jeden Fall die beiden Orte umfaßt, auf denen die Bewegungsgröße auf dem einen Weg gemessen wurde. Anders ausgedrückt enthält das für den anderen Weg erfaßte, zeitabhängige Signal der Bewegungsgröße auch die mindestens zwei Orte, an denen auf dem einen Weg gemessen wurde. Bei dem erfindungsgemäßen Verfahren wird nun durch ein Vergleich, also durch eine mathematische Rechenoperation, so genau wie möglich versucht, die Werte der Bewegungsgröße an den beiden Orten zu finden, an denen sie auf dem einen Weg schon erfaßt wurden. Auf diese Weise werden nur Verhältnisse der Bewegungsgröße, also insbesondere nur Verhältnisse der Geschwindigkeiten, erfaßt und müssen Störeinflüsse nicht berücksichtigt werden.

Die Orte, bei denen die Bewegungsgröße auf dem einen Weg gemessen wird, können frei vorgegeben werden. Wie schon oben erläutert wurde, sind die Orte in der Realität nicht bekannt und müssen auch nicht bekannt sein. Gearbeitet wird mit Zeitpunkten. Da jeder Zeitpunkt aber einem Ort entspricht, an dem sich der Prallkörper zu diesem Zeitpunkt befindet, ist eine eindeutige Zuordnung gegeben. Es empfiehlt sich, als Orte charakteristische Punkte des zeitlichen Verlaufs der induzierten Spannung auf dem einen Weg zu wählen, insbesondere ein Maximum.

Bevorzugt wird die Bewegungsgröße auf dem einen Weg an mindestens drei oder mehr Orten erfaßt. Je größer der Anzahl der Orte ist, für die die Bewegungsgröße auf dem einen Weg bekannt ist, um so mehr Parameter liegen für die Zuordnung der induzierten Spannungskurve des Hinwegs zu derjenigen des Rückweges oder umgekehrt vor. Als günstig hat sich eine Messung an drei Orten des einen Wegs erwiesen.

Als besonders bevorzugt hat es sich herausgestellt, die Induktionsspule und den Permanentmagneten so anzuordnen, daß sowohl auf dem Hinweg als auch auf dem Rückweg ein Nulldurchgang der induzierten Spannung erfolgt. Dann kann dieser Nulldurchgang als ein vorgegebener Ort für die Messung auf beiden Wegen herangezogen werden.

Vorteilhaft ist es, zusätzlich eine weitere Ortsinformation zu erhalten. Dies kann beispielsweise durch einen weiteren Nulldurchgang der induzierten Spannung und/oder durch eine Lichtschranke geschehen, die der Prallkörper auf dem Hinweg und auf dem Rückweg betätigt. Auf diese Weise ist für die Zuordnung der induzierten Spannung des Hinwegs zu derjenigen des Rückwegs ein weiterer Stützpunkt gegeben. Durch zusätzliche weitere Ortsbestimmungen kann die Genauigkeit weiter erhöht werden.

Die verfahrensmäßig ermittelte Bewegungsgröße ist mit der Geschwindigkeit verknüpft, beispielsweise proportional zu ihr oder steht mit der Geschwindigkeit in einer vorgegebenen Abhängigkeit. Da erfindungsgemäß immer nur Verhältnisse der Bewegungsgrößen an den jeweiligen Ort für die Berechnung verwendet werden, muß der eigentliche Wert für die Geschwindigkeit nicht bekannt sein.

Es ist durchaus möglich, die Bewegungsgröße entlang des einen Weges nicht nur punktweise, sondern auch kontinuirlich aufzunehmen und dann diese Kurve auf die kontinuirlich erfaßte Kurve für den Rückweg abzubilden und die für die dafür benötigte Transformation notwendigen Parameter zu berechnen.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. In dieser Zeichnung zeigen:

FIG. 1: Ein Diagramm der Geschwindigkeit v und des Weges x des Prallkörpers über die Zeit t während eines Meßvorgangs,

FIG.2: ein Diagramm entsprechend FIG. 1 für den zeitlichen Verlauf der Induktionsspannung u(t) bei einem Meßvorgang,

FIG. 3: eine prinzipielle Darstellung der für die zur Durchführung des Verfahrens benutzte Vorrichtung,

FIG. 4: eine Darstellung entsprechend FIG. 3 für eine geänderte Vorrichtung und

FIG. 5: eine Darstellung entsprechend FIG. 3 für eine wiederum geänderte Vorrichtung.

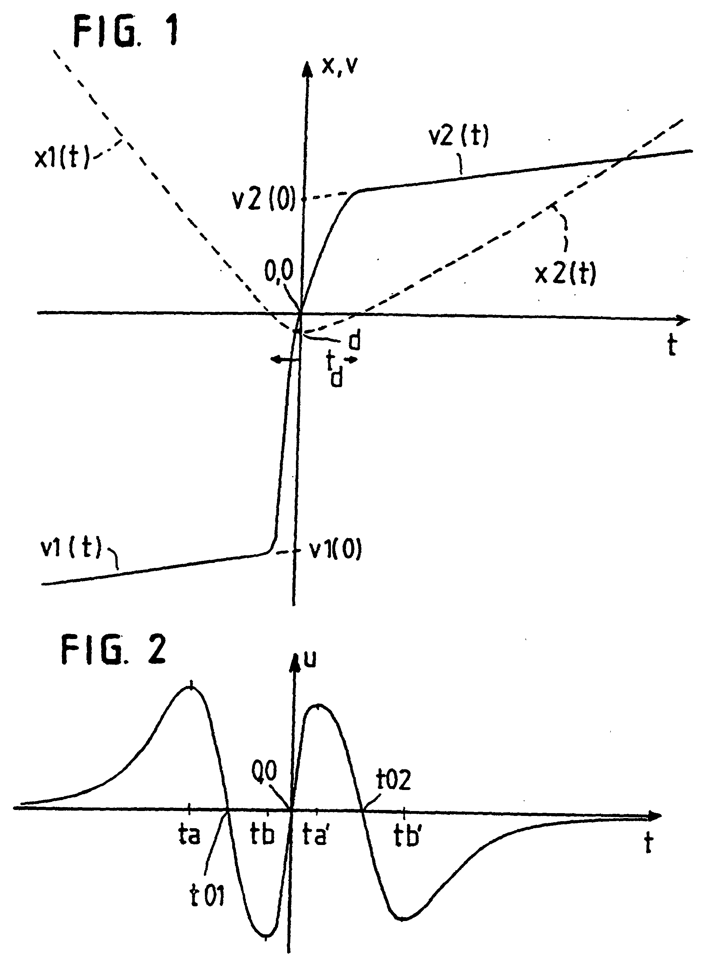

Figur 1 zeigt den zeitlichen Verlauf der Geschwindigkeit und des Weges eines Prallkörpers 20 bei einem typischen Meßvorgang. Aus dieser Darstellung sind auch die verwendeten Bezeichnungen ersichtlich. Aus der Wegkurve, die gestrichelt dargestellt ist, ist zu erkennen, daß für eine gewisse Zeit ein Eindringen vorliegt, die Eindringdauer ist mit $t_d$ bezeichnet, das Eindringen erfolgt mit einer Eindringtiefe d. Der tatsächliche Prallzeitpunkt t0 liegt bei t=0 und ist aus der mit ausgezogenem Strich dargestellten Geschwindigkeitskurve ersichtlich, zum Prallzeitpunkt ändert sich das Vorzeichen der Geschwindigkeit. Der Absolutwert der Geschwindigkeit nimmt auf dem Hinweg, also links des Prallzeitpunktes, stetig ab, der Wert der Geschwindigkeit steigt auf dem Rückweg, also rechts des Prallzeitpunktes, stetig an. Dies ist im wesentlichen dem Einfluß der Gravitation zuzuordnen, die Schußrichtung ist von unten nach oben in der Darstellung gemäß FIG. 1.

Figur 2 zeigt einen typischen zeitlichen Verlauf einer induzierten Spannung. Die gerätemäßigen Voraussetzungen sind so, daß der Permanentmagnet in das Feld einer Induktionsspule eintaucht und wieder aus ihr heraustritt. Dadurch kommt es zu einem Nulldurchgang. Beidseitig dieses Nulldurchgangs wird jeweils ein Maximum erfaßt. Hin- und Rückweg unterscheiden sich aufgrund der geänderten Flugrichtung des Prallkörpers im Vorzeichen. Die Amplitudenwerte auf dem Rückweg sind entsprechend den dabei vorliegenden, kleineren Geschwindigkeiten geringer. Die Maxima liegen nicht notwendigerweise an demselben Ort wie auf dem Hinweg.

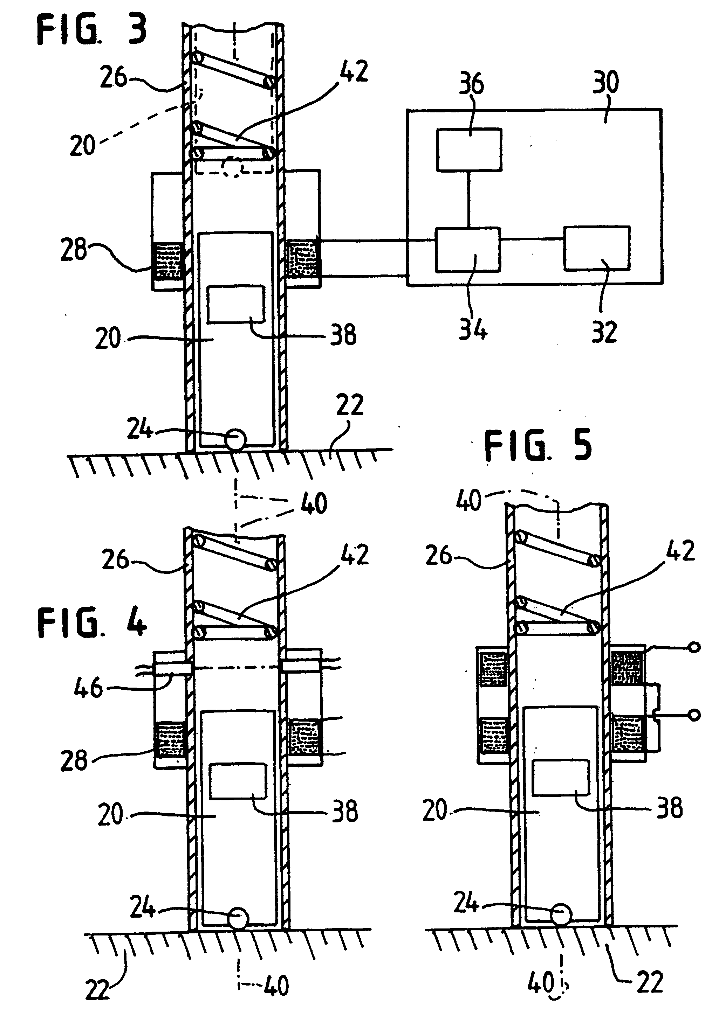

Figur 3 zeigt prinzipiell den Aufbau einer Vorrichtung zur Durchführung des Verfahrens. Ein Prallkörper 20 hat an seinem, einem zu prüfenden Werkstück 22 zugewandten Endbereich einen Eindringkörper 24. Im konkreten Ausführungsbeispiel ist er als gehärtete Stahlkugel ausgebildet. Der Prallkörper 20 ist möglichst frei bewegbar in einem rohrförmigen Gehäuse 26 geführt. Dieses trägt eine Induktionsspule 28, die mit einer Auswertelektronik 30 verbunden ist, welche einen Speicher 32, einen Mikroprozessor 34 und eine Anzeige 36 aufweist.

Mit dem Prallkörper 20 ist ein Permanentmagnet 38 verbunden. Er ist, wie die Induktionsspule 28, um die Achse 40 des rohrförmigen Gehäuses 26 zentriert.

In der dargestellten Position liegt der Eindringkörper 24 auf der Oberfläche des Werkstückes 22 auf. Diese Position stellt einen Zwischenzustand während einer Messung dar. Vor Beginn einer Messung befindet sich der Prallkörper 20 im Abstand von Werkstück 22, dieser Ausgangszustand ist gestrichelt in FIG. 3 angedeutet. Im Ausgangszustand wird die vom Werkstück 22 abgewandte Rückfläche des Prallkörpers 20 von einer Druckfeder 42 belastet, die elastisch vorgespannt ist. Der Prallkörper 20 ist durch eine geeignete, ansich bekannte Vorrichtung arretiert. Sobald diese Arretiervorrichtung freigegeben wird, wird der Prallkörper 20 auf das Werkstück 22 hin beschleunigt, und zwar durch die Kraft der Druckfeder 42 und im gezeigten Ausführungsbeispiel zusätzlich noch durch die Schwerkraft, wenn man von der in FIG. 3 gezeigten Orientierung ausgeht, also der Prallkörper 20 von oben auf ein Werkstück 22 fällt.

Die Druckfeder 42 beschleunigt den Prallkörper 20 nicht während des gesamten Weges, vielmehr nur während eines Teilstücks. Dies ist ein besonderes Merkmal der Erfindung. Wie aus FIG. 3 ersichtlich ist, entspannt sich die Druckfeder 42 nur bis zu einem Ort, der 10 bis 20 mm oberhalb des Prallkörpers 20 (in der Stellung gem. Fig. 3) liegt. Auf demjenigen Teilstück des Weges des Prallkörpers 20, auf dem die noch zu erläuternde Messung erfolgt, ist die Druckfeder 42 nicht mehr in Anlage am Prallkörper 20.

Eine Messung läuft nun wie folgt ab: Aus der beschriebenen, arretierten Stellung des Prallkörpers 20, in der unter dem elastischen Druck der gespannten Druckfeder 42 steht und in Entfernung vom Werkstück 22 ist, beginnt der Prallkörper 20 seinen Hinweg, wenn die Arretierung freigegeben wird. Er wird auf das Werkstück 22 beschleunigt und trifft mit seinem Eindringkörper 24 auf dieses auf. Damit ist der Hinweg abgeschlossen. Während des ersten Teils des Hinweges wird der Prallkörper 20 durch die Druckfeder 42 beschleunigt, mit einem zweiten Teilbereich des Hinweges nicht mehr.

Vom Werkstück 22 prallt der Prallkörper 20 auf einem Rückweg wieder zurück, der Rückweg fällt theoretisch mit dem Hinweg exakt zusammen, in der Praxis können geringe Abweichungen vorliegen. Während des Hinweges und während des Rückweges taucht der Permanentmagnet 38 jeweils von einem Spulenende in die Induktionsspule 28 ein und fällt wieder aus dieser am anderen Spulende heraus. Dadurch wird die aus FIG. 2 ersichtliche induzierte Spannung erhalten. Um das Weg- und Geschwindigkeitsdiagramm gemäß FIG. 1 zu erhalten, muß die Schußrichtung umgekehrt werden, die Anordnung gemäß FIG. 3 also auf den Kopf gestellt werden.

Wie aus FIG. 3 ersichtlich ist, ist die in Richtung der Achse 40 gemessene Länge des Permanentmagneten 38 etwa gleich groß der parallel hierzu bestimmten Axiallänge der Induktionsspule 28. Der effektive Abstand der beiden auf der Achse 40 liegenden Pole des Permanentmagneten 38 ist etwas größer als die geometrische Länge des Permanentmagneten 38, die axiale Länge der Induktionsspule 28 ist damit etwas größer als der effektive Polabstand der beiden Pole des Permanentmagneten 38.

Im folgenden wird nun die Auswertung erläutert.

Zum Prallzeitpunkt gilt $t0 = 0$, weiterhin wird die Position zum Prallzeitpunkt mit $x0 = 0$, angenommen, das Eindringen also vernachlässigt. Mithin beschreiben negative Zeitwerte den Hinweg, positive den Rückweg, gleiches gilt für die Gewschwindigkeit, negative v-Werte beschreiben den Hinweg, positive den Rückweg. Der Hinweg ist jeweils durch eine nachgestellte 1 kenntlich gemacht. So ist $x1(t)$ die Ortsfunktion des Hinweges, $v1(t)$ der Geschwindigkeitsverlauf. Durch 2 ist der Rückweg kenntlich gemacht, so ist $v2(t)$ der Geschwindigkeitsverlauf des Rückwegs. Die Position des Prallkörpers kann jederzeit durch Integration der gemessenen zeitlichen Abhängigkeit der Geschwindigkeit des Prallkörpers $v1(t)$ bzw. $v2(t)$ über die Zeitdauer der zugehörigen Strecke des Hin- bzw. des Rückweges erhalten werden.

Gemessen wird die Induktionsspannung $u(t)$. Ihr zeitlicher Verlauf ist:

$$(A) \qquad u(t) = c(x(t)) \cdot v(t),$$

wobei $c(x)$ eine für die Anordnung Spule-Prallkörper gegebene Funktion der Position des Prallkörper ist. $c(x)$ entspricht dem Verlauf der Induktionsspannung, wenn der Prallkörper mit konstanter "Einheitsgeschwindigkeit" $c(t) = 1$ durch die Induktionsspule fliegt, denn dann wird $x(t) = t$ und damit $u(t) = c(x)$.

Bei der praktischen Härtemessung wird $u(t)$ gemessen und man möchte hieraus $v(t)$ ableiten. Insbesondere ist man an der Größe $h = v2(0):v1(0)$ interessiert, die der Härte in Leeb proportional ist.

Ziel ist es somit, den Verlauf der Induktionsspannung nach dem Aufprall aus dem Verlauf der Induktionsspannung vor dem Aufprall vorherzusagen, ohne daß man die Funktion $c(x)$ kennen muß. Das wird dann möglich, wenn zu jedem Zeitpunkt des Rückweges ein im Sinne der Gleichung (A) entsprechender Zeitpunkt des Hinweges bestimmt werden kann. Zu diesen beiden Zeitpunkten befindet sich der Prallkörper an derselben Stelle, es gilt also x(t1) = x(t2). Allerdings bewegt sich der Prallkörper an dieser Stelle (an diesem Ort) auf dem Hinweg auf das Werkstück 22 zu, auf dem Rückweg aber von ihm weg.

Benötigt wird also eine Beziehung

$$t2=t(t1) \text{ so, daß } x(t1)=x(t2)=x0$$

die für jeden Zeitpunkt des Hinwegs den entsprechenden Zeitpunkt des Rückwegs liefert.

Für die Paare (t1, t2) gilt, daß das Verhältnis der gemessenen Induktionsspannungen gleich dem Verhältnis der Geschwindigkeiten ist:

$$\frac{u(t2)}{u(t1)} = \frac{v(t(t1))}{v(t1)} = u21(t1)$$

$$= \frac{u(t2)}{u(t1)} = \frac{c(x(t2) \cdot v(t2)}{c(x(t1)v(t1)} = \frac{c(x0)}{c(x0)} \cdot \frac{v(t(t1))}{v(t1)} = \frac{v(t(t1))}{v(t1)} = v21(t1)$$

$$v21(t1) = u21(t1).$$

Im allgemeinen hängt dieses Verhältnis vom gewählten Zeitpunkt t1 ab. Der Verlauf von v21(t1) kann, sofern t(t1) bekannt ist, gemessen werden. Gesucht ist v21(0)=h. Der gemessene Verlauf von v21(t1) muß also auf t1=0, wo keine direkte Messung möglich ist, extrapoliert werden.

Für die praktische Auswertung zeigt sich, daß lineare Ansätze für t(t1) und v21(t1) ausreichen. Da der Prallzeitpunkt t1=0 in t2=0 transformiert wird, genügen die Ansätze

$$(B) \qquad t(t1)=a \cdot t1$$

und

$$(C) \qquad v21(t1)=h+b \cdot t1.$$

Die drei Parameter a, b und h werden so variiert, daß der beobachtete Verlauf der Induktionsspannung für den Rückweg aus den gemessenen Werten an drei Orten des Verlaufs für den Hinweg möglichst gut vorhergesagt wird.

Wenn nun die Anordnung so gewählt wird, daß ein Nulldurchgang der Induktionsspannung vorliegt, wie in FIG. 2 dargestellt, läßt sich der Parameter a leicht in guter Näherung erhalten, wenn man berücksichtigt, daß für die Nulldurchgänge auf dem Hinweg t01 und auf dem Rückweg

$$t02 \cdot (t01)=x(t02)$$

gilt, denn an beiden Punkten muß c(x)=0 sein. Es folgt

$$t(t01) \approx a \cdot t01=t02; a \approx t02:t01.$$

Für den Härtewert h ist das Spannungsverhältnis der Induktionsspannung in den Extrema u(ta') und u(ta) eine gute erste Näherung.

$$h \approx \frac{u(ta')}{u(ta)} = \frac{u(t(ta))}{u(ta)}$$

für b erhält man einen guten Ansatz durch

$$b \approx \frac{u(tb') / u(tb) - u(ta') / u(ta)}{tb - ta}$$

$$\frac{u(t(tb)) / u(tb) - u(t(ta)) / u(ta)}{tb - ta}$$

Im nächsten Schritt kann nun h verbessert werden, indem man das Geschwindigkeitsverhältnis für beliebige, korrespondierende Zeitpunkte t1 und t2, wobei praktisch am besten t1=ta und t2=t(ta)) ist, bestimmt, das Ergebnis (C) einsetzt und nach h auflöst.

Verbesserungen der "Korrekturparameter" a und b lassen sich dadurch erhalten, daß man v21 für mehrere Zeitpunkte bestimmt und fordert, daß alle auf denselben Wert von h führen (Ausgleichsrechnung). Damit die vereinfachten Ansätze (B) und (C) nicht zu systematischen Fehlern führen, sollten nur betragsmäßig relativ kleine t1, etwa t01 + (ta-t01) : 2 < t1 ≤ ta gewählt werden.

Schließlich wird h mit den (endgültigen) Parametern a und b für sieben Werte um das dem Prallzeitpunkt nächstgelegene Extremum (hier ist der Fehler am kleinsten) berechnet und der Mittelwert als Härtewert angenommen.

Im Ausführungsbeispiel nach FIG. 4 ist zusätzlich eine Lichtschranke 46 zur separaten Ortsmessung vorgesehen. Eine Ortsbestimmung kann man auf dem bisher beschriebenen, induktiven Wege am Ort des Nulldurchgangs der Induktionsspannung erhalten. Für das erfindungsgemäße Verfahren ist ein Nulldurchgang der induzierten Spannung zwar vorteilhaft, aber nicht notwendig. Die Anordnung gemäß FIG. 4 mit der Lichtschranke 46 erfaßt einen Ort des Prallkörpers 20 in Ergänzung zu einer Ortsbestimmung mit Nulldurchgang der induzierten Spannung oder nicht.

Wie FIG. 4 zeigt, besteht die Lichtschranke 46 aus einem Sender, beispielsweise einer IR-Leuchtdiode und einem dieser zugeordneten Empfänger. In der arretierten Stellung ist der Prallkörper 20 oberhalb der Lichtschranke, sobald er sich aber ausreichend der Oberfläche des Werkstücks 22 genähert hat, unterbricht er sie und gibt sie dann im weiteren Verlauf, beispielsweise wenn er 3 mm vom Werkstück 22 ihr entfernt ist, wieder frei. Auf dem Rückweg geschieht an denselben Orten das umgekehrte, die Lichtschranke wird wieder unterbrochen, bzw. freigegeben sobald der Prallkörper entsprechende Strecken des Rückweges zurückgelegt hat. Das entsprechende Signal der Lichtschranke 46 kann in den zeitlichen Verlauf der induzierten Spannung eingeblendet werden, beispielsweise als Nadelimpuls oder zusätzliche eingeblendete Informationen.

Im Ausführungsbeispiel nach FIG. 5 ist die Induktionsspule 28 aus zwei separaten Spulen zusammengesetzt, die in Gegenrichtung zueinander geschaltet sind. Dadurch erhält man einen Verlauf der Induktionsspannung mit zwei Maxima entgegengerichteten Vorzeichens und einem Nulldurchgang, wenn sich der Permanentmagnet 38 aus der Mitte der oberen Induktionsspule bis zur Mitte der unteren Induktionsspule bewegt. Man erhält noch weitere Nulldurchgänge, wenn man einen größeren Weg des Permanentmagneten 38 vorgibt.

## Patentansprüche

**1.** Verfahren zur Härteprüfung von Werkstücken (22), bei dem ein Prallkörper (20) so auf das zu prüfende Werkstück (22) bewegt wird, daß er entlang eines Hinweges auf dieses aufschlägt und entlang eines Rückwegs wieder von ihm zurückprallt, wobei auf dem Hinweg und auf dem Rückweg mittels einer berührungslos arbeitenden, elektromechanischen Einrichtung jeweils eine Bewegungsgröße des Prallkörpers (20) erfaßt und aus dem Unterschied der Bewegungsgröße des Hinwegs und derjenigen des Rückwegs ein Maß für die Härte des Werkstücks (22) erhalten wird, **dadurch gekennzeichnet, daß** die Bewegungsgröße mindestens an zwei unterschiedlichen Orten entlang eines Wegs, z. B. des Hinwegs erfaßt wird, daß auf dem anderen Weg, z. B. Rückweg, die Bewegungsgröße kontinuierlich in Abhängigkeit von der Zeit und für einen örtlichen Bereich, der auf jeden Fall die beiden genannten unterschiedlichen Orte des einen Wegs enthält, erfaßt wird, daß durch eine Rechenoperation die Werte für die Bewegungsgröße des anderen Wegs an den mindestens zwei Orten des einen Wegs berechnet werden, und daß aus dem Vergleich der Bewegungsgrößen jeweils gleichen Orts ein Maß für die Härte des Werkstücks (22) ermittelt wird.

**2.** Verfahren zur Härteprüfung nach Anspruch 1, **dadurch gekennzeichnet, daß** die Bewegungsgröße mindestens an drei unterschiedlichen Orten des einen Wegs ermittelt wird.

**3.** Verfahren zur Härteprüfung nach Anspruch 1, **dadurch gekennzeichnet, daß** der Prallkörper (20) einen Permanentmagneten (38) aufweist und daß sich stationär um den Prallkörper (20) herum eine Induktionsspule (28) befindet.

**4.** Verfahren zur Härteprüfung nach Anspruch 1, **dadurch gekennzeichnet, daß** die Bewegungsgröße entweder die Geschwindigkeit selbst ist oder die Bewegungsgröße in einer festen Beziehung zur Geschwindigkeit steht.

**5.** Verfahren zur Härteprüfung nach Anspruch 3, **dadurch gekennzeichnet, daß** der Permanentmagnet (38) und die Induktionsspule (28) so angeordnet und ausgebildet sind, daß bei einer Messung die induzierte Spannung sowohl auf dem Hinwege als auch auf dem Rückwege einen Nulldurchgang aufweist.

6. Verfahren zur Härteprüfung nach Anspruch 1, **dadurch gekennzeichnet, daß** die Bewegungsgröße elektromagnetisch mittels eines Permanentmagneten (38) und einer Induktionsspule (28) erfaßt wird und daß vorzugsweise zusätzlich mindestens eine Ortsbestimmung durchgeführt wird, beispielsweise mittels einer Lichtschranke (46).

7. Vorrichtung zur Durchführung des Verfahrens nach einem der Ansprüche 1 bis 6, zur Härteprüfung von Werkstükken (22), mit einem Prallkörper (20), der einen Eindringkörper (24) und einen Permanentmagneten (38) aufweist und der so auf das zu prüfende Werkstück (22) bewegt wird, daß er entlang eines Hinweges auf dieses aufschlägt und entlang eines Rückweges wieder von ihm zurückprallt, und mit einem rohrförmigen Gehäuse, in dem der Prallkörper (20) verschiebbar angeordnet ist und das eine Induktionsspule (28) für eine berührungslos arbeitende Erfassung jeweils einer Bewegungsgröße des Prallkörpers (20) trägt, wobei aus dem Unterschied der Bewegungsgröße des Hinwegs und derjenigen des Rückwegs ein Maß für die Härte des Werkstücks (22) erhalten wird, **dadurch gekennzeichnet, daß** die Bewegungsgröße mindestens an zwei unterschiedlichen Orten entlang eines Weges, z.B. des Hinwegs erfaßt wird, daß auf dem anderen Weg, z.B. Rückweg, die Bewegungsgröße kontinuierlich in Abhängigkeit von der Zeit und für einen örtlichen Bereich, der auf jeden Fall die beiden genannten unterschiedlichen Orte des einen Weges enthält, erfaßt wird, daß die Induktionsspule (28) und der Permanentmagnet (38) so angeordnet sind, daß auf dem Hinweg und auf dem Rückweg des Prallkörpers (20) die induzierte Spannung jeweils einen Nulldurchgang aufweist und daß eine Auswerteelektronik (30) vorgesehen ist, in der durch eine Rechenoperation die Werte für die Bewegungsgröße des anderen Weges an den mindestens zwei Orten des einen Weges berechnet werden und aus dem Vergleich der Bewegungsgrößen jeweils gleichen Orts ein Maß für die Härte des Werkstücks (22) ermittelt wird.

8. Vorrichtung zur Durchführung des Verfahrens von einem der Ansprüche 1 bis 6, **dadurch gekennzeichnet, daß** mindestens eine zusätzliche Vorrichtung zur Ortsbestimmung des Prallkörpers (20) vorgesehen ist, beispielsweise in Form einer Lichtschranke (46).

9. Vorrichtung zur Durchführung des Verfahrens von einem der Ansprüche 1 bis 6, **dadurch gekennzeichnet, daß** eine weitere zusätzliche Induktionsspule (28) vorgesehen ist, deren Windungen örtlich anders verteilt sind als diejenigen der ersten Induktionsspule (28).

10. Vorrichtung nach einem der Ansprüche 7 bis 9, **dadurch gekennzeichnet, daß** sie einen Speicher für die gemessenen Werte der Bewegungsgröße und einen Mikroprozessor (34) aufweist.

11. Vorrichtung nach einem der Ansprüche 7 bis 10, **dadurch gekennzeichnet, daß** die in Bewegungsrichtung des Prallkörpers (20) gemessene Länge der Induktionsspule (28) sich um maximal den Faktor 2 vom Polabstand des in der gleichen Richtung angeordneten Permanentmagneten (38) unterscheidet, vorzugsweise dieser Unterschied kleiner ist als der Faktor 1,2.

**Claims**

1. A method of testing the hardness of workpieces (22) by which an impact body (20) is propelled onto the workpiece (22) to be tested in such a manner that it strikes said workpiece on its forward path and then rebounds along a return path, one quantity of motion of the impact body (20) being detected on the respective one of the forward and return paths by means of a contactless operating electromechanical device and a quantity of the workpiece (22) hardness being obtained from the difference between the quantity of motion of the forward path and that of the return path, **characterized in that** the quantity of motion is detected along one path, the forward path for example, at two different sites at least, that, on the other path, the return path for example, the quantity of motion is detected continuously as a function of time for a region that includes in any event the two mentioned different sites of the one path, that the values for the quantity of motion of the other path at the at least two sites of the one path are calculated by an arithmetic operation and that a quantity of the workpiece (22) hardness is determined by comparing the quantities of motion at the same site respectively.

2. The hardness testing method of claim 1, **characterized in that** the quantity of motion is detected at three different sites at least of the one path.

**EP 0 823 047 B1**

3. The hardness testing method of claim 1, **characterized in that** the impact body (20) is provided with a permanent magnet (38) and that an induction coil (28) is located in a stationary position around the impact body.

4. The hardness testing method of claim 1, **characterized in that** the quantity of motion is the very velocity or that the quantity of motion is in a permanent relationship to the velocity.

5. The hardness testing method of claim 3, **characterized in that** the permanent magnet (38) and the induction coil (28) are arranged and configured in such a manner that, during a measurement, the induced voltage has a zero crossing both on the forward and on the return path.

6. The hardness testing method of claim 1, **characterized in that** the quantity of motion is read by electromagnetic detection using a permanent magnet (38) and an induction coil (28) and that, in addition, preferably at least one position determination is carried out, by means of a photosensitive device (46) for example.

7. A device for carrying out the method according to one of the claims 1 through 6 for testing the hardness of workpieces (22), with an impact body (20) that has a penetrating stamp (24) and a permanent magnet (38) and is propelled onto the workpiece (22) to be tested in such a manner that it strikes said workpiece on its forward path and then rebounds along a return path, and with a tubular housing that slidably accommodates the impact body (20) and carries an induction coil (28) for contactless detection of one quantity of motion of the impact body (20) respectively, a quantity of the workpiece (22) hardness being obtained from the difference between the quantity of motion of the forward path and that of the return path, **characterized in that** the quantity of motion is detected along one path, the forward path for example, at two different sites at least, that, on the other path, the return path for example, the quantity of motion is detected continuously as a function of time for a region that includes in any event the two mentioned different sites of the one path, that the induction coil (28) and the permanent magnet (38) are arranged in such a manner that the induced voltage has a zero crossing on the respective one of the forward, and return paths of the impact body (20) and that an evaluation electronics (30) is provided in which the values for the quantity of motion of the other path at the at least two sites of the one path are calculated by an arithmetic operation and a quantity of the workpiece (22) hardness is determined by comparing the quantities of motion at the same site respectively.

8. The device for carrying out the method according to one of the claims 1 through 6, **characterized in that** at least one additional device is provided for determining the position of the impact body (20), said device being for example a photosensitive device (46).

9. The device for carrying out the method according to one of the claims 1 through 6, **characterized in that** an additional induction coil (28) is provided, the winding turns of which are positioned differently than those of the first induction coil (28).

10. The device according to one of the claims 7 through 9, **characterized in that** it is provided with a memory for the measured values of the quantity of motion and with a microprocessor (34).

11. The device according to one of the claims 7 through 10, **characterized in that** the length of the induction coil (28) measured in the direction of motion of the impact body (20) differs by the factor 2 at most from the pole spacing of the permanent magnet (38) arranged in the same direction, said difference being preferably smaller than the factor 1.2.

**Revendications**

1. Procédé destiné à évaluer la dureté d'une pièce (22) selon lequel un équipage mobile (20) est déplacé en direction de la pièce (22) à tester de telle sorte qu'à l'aller il vient se heurter contre celle-ci et qu'il rebondit ensuite le long d'une trajectoire de retour, une quantité de mouvement de l'équipage mobile (20) étant détectée à l'aller et au retour au moyen d'un organe électromagnétique fonctionnant sans contact et le degré de dureté de la pièce (22) étant obtenu de la différence entre la quantité de mouvement à l'aller et celle au retour, **caractérisé en ce que** la quantité de mouvement est détectée à au moins deux endroits différents le long d'un trajet, l'aller par exemple, que, sur l'autre trajet, celui du retour par exemple, la quantité de mouvement est détectée en continu en fonction du temps et pour une région contenant dans tous les cas les deux différents endroits mentionnés de l'un des trajets, que les valeurs pour la quantité de mouvement de l'autre trajet sont calculées par une opération de calcul aux au moins deux endroits de l'un des trajets et que le degré de dureté de la pièce (22) est déterminé en comparant les quantités de mouvement respectives détectées au même endroit.

2. Procédé d'évaluation de la dureté selon la revendication 1, **caractérisé en ce que** la quantité de mouvement est détectée à au moins trois endroits différents de l'un des trajets.

3. Procédé d'évaluation de la dureté selon la revendication 1, **caractérisé en ce que** l'équipage mobile (20) comporte un aimant permanent (38) et qu'une bobine d'induction (28) fixe est enroulée autour de l'équipage mobile (20).

4. Procédé d'évaluation de la dureté selon la revendication 1, **caractérisé en ce que** la quantité de mouvement est la vitesse même ou qu'il existe une relation fixe entre la quantité de mouvement et la vitesse.

5. Procédé d'évaluation de la dureté selon la revendication 3, **caractérisé en ce que** l'aimant permanent (38) et la bobine d'induction (28) sont disposés et réalisés de telle sorte que, lorsqu'on effectue une mesure, la tension induite présente un passage par zéro à l'aller comme au retour.

6. Procédé d'évaluation de la dureté selon la revendication 1, **caractérisé en ce que** la quantité de mouvement est saisie par détection électromagnétique au moyen d'un aimant permanent (38) et d'une bobine d'induction (28) et que de plus la position est de préférence déterminée au moins une fois, au moyen d'une barrière photoélectrique (46) par exemple.

7. Dispositif destiné à mettre en oeuvre le procédé d'évaluation de la dureté de pièces (22) selon l'une quelconque des revendications 1 à 6, avec un équipage mobile (20) comportant un pénétrateur (24) et un aimant permanent (38) qui est déplacé en direction de la pièce à tester (22) de telle sorte qu'à l'aller il vient se heurter contre celle-ci et qu'il rebondit ensuite le long d'une trajectoire de retour, et avec un boîtier tubulaire dans lequel est monté coulissant l'équipage mobile (20) et qui porte une bobine d'induction (28) pour une détection sans contact d'une quantité de mouvement respective de l'équipage mobile (20), le degré de dureté de la pièce (22) étant obtenu de la différence entre la quantité de mouvement à l'aller et celle au retour, **caractérisé en ce que** la quantité de mouvement est détectée à au moins deux endroits différents le long d'un trajet, l'aller par exemple, que, sur l'autre trajet, celui du retour par exemple, la quantité de mouvement est détectée en continu en fonction du temps et pour une région contenant dans tous les cas les deux différents endroits mentionnés de l'un des trajets, que la bobine d'induction (28) et l'aimant permanent (38) sont disposés de telle sorte que la tension induite présente un passage par zéro sur le trajet aller et sur le trajet retour effectué par l'équipage mobile (20) et qu'un dispositif d'évaluation électronique (30) est prévu dans lequel sont calculées par une opération de calcul les valeurs pour la quantité de mouvement de l'autre trajet aux au moins deux endroits de l'un des trajets et est déterminé le degré de dureté de la pièce (22) par la comparaison des quantités de mouvement respectives détectées au même endroit.

8. Dispositif destiné à mettre en oeuvre le procédé selon l'une quelconque des revendications 1 à 6, **caractérisé en ce qu'**il est prévu au moins un dispositif supplémentaire destiné à déterminer la position de l'équipage mobile (20), ledit dispositif étant par exemple réalisé sous forme de barrière photoélectrique (46).

9. Dispositif destiné à mettre en oeuvre le procédé selon l'une quelconque des revendications 1 à 6, **caractérisé en ce qu'**il est prévu une bobine d'induction (28) supplémentaire dont les spires sont disposées d'une autre manière que celles de la première bobine d'induction (28).

10. Dispositif selon l'une quelconque des revendications 7 à 9, **caractérisé en ce qu'**il comporte une mémoire pour les valeurs mesurées de la quantité de mouvement et un microprocesseur (34).

11. Dispositif selon l'une quelconque des revendications 7 à 9, **caractérisé en ce que** la longueur de la bobine d'induction (28) mesurée dans la direction de mouvement de l'équipage mobile (20) diffère de l'écart entre les pôles de l'aimant permanent (38) disposé dans la même direction par une différence de facteur 2 maximum, cette différence étant de préférence inférieure à une différence de facteur 1,2.

FIG. 1

FIG. 2

FIG. 3

FIG. 4

FIG. 5